(19) 

Europäisches
Patentamt
European
Patent Office
Office européen
des brevets

(11) **EP 4 443 296 A1**

(12) **EUROPEAN PATENT APPLICATION**
published in accordance with Art. 153(4) EPC

(43) Date of publication:
**09.10.2024 Bulletin 2024/41**

(21) Application number: **22914443.1**

(22) Date of filing: **21.12.2022**

(51) International Patent Classification (IPC):
*G06F 9/54* (2006.01)        *G06F 16/9532* (2019.01)
*G06F 16/2455* (2019.01)        *G06F 16/242* (2019.01)
*H04L 67/12* (2022.01)        *F24F 11/64* (2018.01)
*F24F 11/80* (2018.01)

(52) Cooperative Patent Classification (CPC):
**G06F 9/542; F24F 11/64; F24F 11/80;**
**G06F 11/3072; G06F 16/242; G06F 16/2455;**
**G06F 16/9532;** G06F 2201/86; H04L 67/12

(86) International application number:
**PCT/CN2022/140641**

(87) International publication number:
**WO 2023/125189 (06.07.2023 Gazette 2023/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.12.2021 CN 202111674682**

(71) Applicant: **Huawei Technologies Co., Ltd.**
**Shenzhen, Guangdong 518129 (CN)**

(72) Inventors:
• **HAN, Yuankun**
 **Shenzhen, Guangdong 518129 (CN)**

• **SHI, Hongyu**
 **Shenzhen, Guangdong 518129 (CN)**
• **WANG, Yang**
 **Shenzhen, Guangdong 518129 (CN)**
• **DAI, Feiping**
 **Shenzhen, Guangdong 518129 (CN)**
• **HUANG, Yu**
 **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **EVENT RULE PROCESSING METHOD AND APPARATUS, AND EVENT PROCESSING METHOD AND APPARATUS**

(57)    This application provides an event processing method, applied to filtering of events in a server. The method includes: matching a to-be-filtered event against an event matching rule, where the event matching rule is used for performing filtering to obtain an event that meets one or more first conditions and one or more second conditions, and the second condition indicates duration or repeatability of the one or more first conditions; and sending an instruction to a destination address when the to-be-filtered event meets the event matching rule. The event processing method provided in this application supports condition rule configuration of duration or repeatability, for example, a timing rule or a count rule. This increases event rule configuration types, and the rule has high extensibility, so that events in a complex Internet of things scenario can be effectively filtered.

FIG. 1

EP 4 443 296 A1

**Description**

This application claims priority to Chinese Patent Application No. 202111674682.0, filed with the China National Intellectual Property Administration on December 31, 2021 and entitled "EVENT RULE METHOD AND APPARATUS AND EVENT METHOD AND APPARATUS", which is incorporated herein by reference in its entirety.

**TECHNICAL FIELD**

Embodiments of this application relate to the field of computer technologies, and in particular, to an event rule method and apparatus and an event method and apparatus.

**BACKGROUND**

Serverless (serverless) is another new computing mode that has gained popularity after microservices. Currently, serverless function computing is a typical event-driven model, and the event-driven model includes an event source, an event bus, and an event handler. Events are sent to the event bus through event sources. Events are filtered in the event bus. An event that meets a rule (rules) for the event bus is sent to an event destination.

In a serverless function computing scenario, the events are generated on an event source side, and the event bus performs filtering or another operation on the events, to trigger a function to run. In this way, the event handler handles the events and reacts to the events. The event bus is used as middleware between the event sources and the event handler, a core function of the event bus is to filter or aggregate the events. Currently, an event bus according to a conventional technical solution is inadequate for processing an event rule.

For example, in a first type of event bus according to the conventional technology, filtering rules are classified into prefix matching (prefix matching), anything-but matching (anything-but matching), numeric matching (numeric matching), IP address matching (IP address matching), exists matching (exists matching), and complex example with multiple matching (compiex example with multiple matching). Prefix matching is used for matching a prefix or character string in an event. Anything-but matching means matching any events except a given field. Numeric matching means matching a value in a given field based on rules such as greater than, less than, or equal to. IP address matching is used for matching IPv4 and IPv6 addresses. Exists matching works on the presence or absence of a field in the JSON of the event. Complex example with multiple matching is mainly used for combining the plurality of filtering conditions and using the plurality of filtering conditions in conjunction with each other, and works on a complex filtering scenario.

The conventional technology provides a second type of event bus. Compared with the first type of event bus, the second type of event bus has more filtering rules. For example, suffix matching (suffix matching) and array matching (array matching) are added to the second type of event bus.

The event buses provided in the conventional technology have the following disadvantages: Few event filtering rules are defined. The filtering rules in the event buses are fixed, only a currently provided event rule is supported, and custom rule configuration by a user is not supported. Therefore, the event buses provided in the conventional technology cannot adapt to a requirement of event filtering in a complex rule filtering scenario, for example, an Internet of things (IoT) scenario.

For example, in an Internet of things scenario, for filtering of an air conditioner turn-on event, the event is sent to an event destination, that is, an air conditioner will be turned on, only when the following two conditions are met: there are two consecutive events that the temperature exceeds 30 degrees; and it is detected that there is a person at home for 1 second. The event rules in the conventional technology cannot meet this type of event filtering condition.

**SUMMARY**

To resolve the foregoing problem, embodiments of this application overcome deficiencies in event rule processing of the event bus provided in the conventional technology. A programmed event rule expression is provided and a plugin (plugin) manner is used, to support custom extension rules, and support a duration or repetitive function condition, for example, an aggregation function condition. This caters to a complex scenario. Embodiments of this application provide an event processing method and apparatus, and an event rule registration method and apparatus.

According to a first aspect, an embodiment of this application provides an event processing method, applied to filtering of events in a server. The method includes: matching a to-be-filtered event against an event matching rule, where the event matching rule is used for performing filtering to obtain an event that meets one or more first conditions and one or more second conditions, and the second condition indicates duration or repeatability of the one or more first conditions; and sending an instruction to a destination address when the to-be-filtered event meets the event matching rule. In this way, the event processing method provided in this application supports condition rule configuration of duration or repeatability of the one or more first conditions, to meet an event processing requirement for duration or repeatability.

For example, in an Internet of things scenario provided in the Background, for filtering of an air conditioner turn-on event, the air conditioner turn-on event is sent to an event destination only when a temperature event count is met and a human-at-home duration event is met. The event processing method provided in this application is used to support condition rule configuration of duration or repeatability, for example, a timing rule or a count rule. This increases event rule configuration types, and the rule has high extensibility, so that events in this type of complex scenario can be effectively filtered.

In a feasible implementation, the events in the server are matched against one or more third conditions, to obtain the to-be-filtered event, where the to-be-filtered event is an event that meets the one or more third conditions. In this way, whether the event is an event that meets the event matching rule may be determined based on the third condition, to perform preliminary filtering. The event preliminary filtering may determine which events are concerned, to filter out events that are not interested, to reduce a subsequent event processing scale, and improve responsiveness of the server to an event. This can bring good experience to a user.

In a feasible implementation, the third condition includes a key and a key value. Therefore, because the key of the third condition may indicate a specified user identifier, for example, an address, a name, a domain name, and the like, event filtering rules may be managed by groups based on keys and key values and based on user identifiers. The third condition is managed based on a map structure established based on the keys and the key values. This can improve a processing manner of the conventional technology in which event rules are directly polled and traversed, and can adapt to management of a large scale of event rules.

In a feasible implementation, the matching the events in the server against one or more third conditions includes: obtaining keys and key values of the events; matching the keys of the events against keys of the one or more third conditions; and when a key of an event meets the keys of the one or more third conditions, matching a key value of the event against key values of the one or more third conditions, where the to-be-filtered event is an event that meets the key values of the one or more third conditions. In this way, when there is a large scale of events, polling does not need to be performed to search for an event that meets the rule. The to-be-filtered event and an applicable rule can be directly obtained by matching the keys and the corresponding key values of the events against the keys and the corresponding key values of the third conditions. This can quickly implement the event preliminary filtering.

In a feasible implementation, the event matching rule is expressed in a form of a tree. The tree includes one or more parent nodes and a plurality of child nodes. A first condition and a second condition that correspond to each other are used as different child nodes of a same parent node, and a parent node of a first condition and a second condition that match each other corresponds to an AND operation rule. In this way, the event matching rule is decomposed into a tree form, allowing for finer granularity in expressing conditions for event matching, which includes, for example, a value, a counting condition, a duration condition, and the like for event matching.

In a feasible implementation, the matching a to-be-filtered event against an event matching rule means traversing the tree for the to-be-filtered event. This can cater to event filtering in a plurality of scenarios, for example, a single-event scenario, an event aggregation scenario, and a scenario with high throughput and a large quantity of rules. In this way, the events can be quickly matched against the event matching rule.

In a feasible implementation, the method further includes: obtaining an event filtering rule, where the event filtering rule is used for performing filtering to obtain an event that meets all of the one or more third conditions and the event matching rule; and storing the one or more third conditions and the event matching rule. In this way, in this application, the event filtering rule may be obtained, and a plugin manner is used, to support custom rule configuration and rule extension.

Based on the implementation, the storing the one or more third conditions includes: obtaining the keys of the one or more third conditions, and obtaining the key values of the one or more third conditions; and storing a key combination and a key value combination, where the key combination is a combination of the keys of the one or more third conditions, and the key value combination is a combination of the key values of the one or more third conditions. In this way, in this application, the event filtering rule may be stored based on the key combination and the key value combination of the third conditions. For ease of understanding, this storage manner may be considered as similar to group storage. The key of the third condition is a group sequence identifier of a group, and the key value of the third condition is an identifier of each group member in the group. In this way, an applicable event filtering rule can be directly obtained by matching the key of the event against the key and the key value of the third condition.

Based on the implementation, when the to-be-filtered event is obtained by matching the events in the server against the one or more third conditions, the event matching rule is stored. In this way, this application implements the preliminary filtering, and obtains the to-be-filtered event and the corresponding event matching rule. This reduces a subsequent event processing scale and improves responsiveness of the server to an event. This can bring good experience to a user.

According to a second aspect, an embodiment of this application provides an event rule processing method. The method includes: obtaining an event filtering rule, where the event filtering rule is used for performing filtering to obtain an event that meets all of one or more third conditions and an event matching rule, the event matching rule is used for performing filtering to obtain an event that meets one or more first conditions and one or more second conditions, and the second condition indicates duration or repeatability of the one or more first conditions; and storing the one or more third conditions and the event matching rule.

In this way, according to the method in this embodiment of this application, condition rule configuration of duration or repeatability, for example, a timing rule or a count rule, can be obtained. This increases event rule configuration types, and the rule has high extensibility, to cater to an event rule in a complex scenario and help improve product competitiveness.

In a feasible implementation, the third condition includes a key and a key value. For beneficial effects of this implementation, refer to those in the first aspect. Details are not described herein again.

In a feasible implementation, the storing the one or more third conditions includes: obtaining keys of the one or more third conditions, and obtaining key values of the one or more third conditions; and storing a key combination and a key value combination, where the key combination is a combination of the keys of the one or more third conditions, and the key value combination is a combination of the key values of the one or more third conditions. For beneficial effects of this implementation, refer to those in the first aspect. Details are not described herein again.

In a feasible implementation, the event matching rule is stored in a form of a tree. The tree includes one or more parent nodes and a plurality of child nodes. A first condition and a second condition that match each other are used as different child nodes of a same parent node, and the parent node of the first condition and the second condition that match each other uses an AND operation manner. For beneficial effects of this implementation, refer to those in the first aspect. Details are not described herein again.

In a feasible implementation, the three is used for performing filtering to obtain a to-be-filtered event, and the to-be-filtered event is an event that meets the one or more third conditions. For beneficial effects of this implementation, refer to those in the first aspect. Details are not described herein again.

In a feasible implementation, the one or more third conditions are used for performing matching on events in a server to obtain the to-be-filtered event, and the to-be-filtered event is the event that meets the one or more third conditions. For beneficial effects of this implementation, refer to those in the first aspect. Details are not described herein again.

According to a third aspect, an embodiment of this application provides an event processing apparatus. The apparatus includes: a matching module, where the matching module is configured to match a to-be-filtered event against an event matching rule, the event matching rule is used for performing filtering to obtain an event that meets one or more first conditions and one or more second conditions, and the second condition indicates duration or repeatability of the one or more first conditions; and a sending module, where the sending module is configured to send an instruction to a destination address when the to-be-filtered event meets the event matching rule.

In a feasible implementation, the apparatus further includes a filtering module, where the filtering module is configured to match events in a server against one or more third conditions, to obtain the to-be-filtered event, and the to-be-filtered event is an event that meets the one or more third conditions.

In a feasible implementation, the third condition includes a key and a key value.

In a feasible implementation, the event matching rule is expressed in a form of a tree. The tree includes one or more parent nodes and a plurality of child nodes. A first condition and a second condition that match each other are used as different child nodes of a same parent node, and the parent node of the first condition and the second condition that match each other uses an AND operation manner.

In a feasible implementation, the matching a to-be-filtered event against an event matching rule means traversing the tree for the to-be-filtered event.

According to a fourth aspect, an embodiment of this application provides an event rule registration apparatus. The apparatus includes: an obtaining module, where the obtaining module is configured to obtain an event filtering rule, the event filtering rule is used for performing filtering to obtain an event that meets all of one or more third conditions and an event matching rule, the event matching rule is used for performing filtering to obtain an event that meets one or more first conditions and one or more second conditions, and the second condition indicates duration or repeatability of the one or more first conditions; and a storage module, where the storage module is configured to separately store the one or more third conditions and the event matching rule.

In a feasible implementation, the third condition includes a key and a key value.

In a feasible implementation, the event matching rule is stored in a form of a tree. The tree includes one or more parent nodes and a plurality of child nodes. A first condition and a second condition that match each other are used as different child nodes of a same parent node, and the parent node of the first condition and the second condition that match each other uses an AND operation manner.

In a feasible implementation, the three is used for performing filtering to obtain a to-be-filtered event, and the to-be-filtered event is an event that meets the one or more third conditions.

In a feasible implementation, the one or more third conditions are used for performing matching on events in a server to obtain the to-be-filtered event, and the to-be-filtered event is the event that meets the one or more third conditions.

According to a fifth aspect, an embodiment of this application provides an electronic device, including: at least one memory, configured to store a program, and at least one processor, configured to execute the program stored in the memory. When the program stored in the memory is executed, the processor is configured to perform any event processing method according to the first aspect and any event rule processing method according to the second aspect.

According to a sixth aspect, an embodiment of this application provides a storage medium. The storage medium stores computer-executable instructions, and when the computer-executable instructions are invoked by a computer, the computer is enabled to perform any event processing method according to the first aspect and any event rule processing method according to the first aspect.

BRIEF DESCRIPTION OF DRAWINGS

To more clearly describe the technical solutions of a plurality of embodiments disclosed in this description, the following briefly describes accompanying drawings required for describing embodiments. Definitely, the accompanying drawings in the following description show merely the plurality of embodiments disclosed in this description, and a person of ordinary skill in the art may further derive other accompanying drawings from these accompanying drawings without creative efforts.

The following briefly describes accompanying drawings required for describing embodiments or the conventional technology.

FIG. 1 is a diagram of an architecture of an application system of an event processing method according to an embodiment of this application;

FIG. 2 is a diagram of a structure of a rule expression according to an embodiment of this application;

FIG. 3 is a diagram of map group-map initialization configuration structures according to an embodiment of this application;

FIG. 4A is a flowchart of adding an event rule according to an embodiment of this application;

FIG. 4B is a diagram of map group-map structures obtained after adding the event rule according to an embodiment of this application;

FIG. 5 is a flowchart of constructing a tree-shaped structure of an event matching rule according to an embodiment of this application;

FIG. 6 is a diagram of a rule expression tree according to an embodiment of this application;

FIG. 7 is a flowchart in which events are preliminarily filtered in an event processing method according to an embodiment of this application;

FIG. 8 is a flowchart of traversing a rule expression tree for a to-be-filtered event according to an embodiment of this application;

FIG. 9 is a diagram of event rule processing in an air-conditioner turn-on scenario according to Embodiment 1 of this application;

FIG. 10 is a flowchart of preliminary filtering of an event rule for the scenario in FIG. 9 according to an embodiment of this application;

FIG. 11 is a diagram of states of nodes after a rule expression tree is traversed for an event according to Embodiment 2 of this application;

FIG. 12 shows an event processing apparatus according to an embodiment of this application;

FIG. 13 shows an event rule registration apparatus according to an embodiment of this application; and

FIG. 14 shows an electronic device according to an embodiment of this application.

DESCRIPTION OF EMBODIMENTS

The following description relates to "some embodiments", which describe subsets of all possible embodiments, but it may be understood that "some embodiments" may be same or different subsets of all the possible embodiments and may be combined with each other without conflict.

In the following description, terms "first\second\third, and the like", or a module A, a module B, a module C, and the like are merely used to distinguish between similar objects, and do not represent a specific order of objects. It may be understood that specific orders or sequences may be interchanged when allowed, so that embodiments of this application described herein can be implemented in an order other than those shown or described herein.

In this application:

An event source is an event generator. An event source includes a cloud service, a custom application, and an SaaS application.

An event is information generated by an application, for example, a cloud server, the custom application, and the SaaS application.

An event bus is configured to store an event rule and a received event, and route an instruction or a message to an event destination based on the event rule.

The event destination is an instruction handler or a message handler. The event destination includes the cloud server, an HTTP gateway, or the like.

A key (key) indicates an event field to be filtered, and a key value (value) indicates a specific filtering condition.

A scheduler (scheduler) is configured to preliminarily filter events and allocate an event that meets a preliminary filtering condition and allocate a corresponding rule.

A to-be-filtered event is an event that has passed preliminary filtering.

A worker (worker) is configured to match, against the rule at finer granularity, the to-be-filtered event that is allocated by the scheduler, for example, matching the event against a number, a counting condition, or a delay condition. When the to-be-filtered event meets an event matching rule, an instruction is sent to a target address.

An atomic condition (condition) is an existing single condition expression, for example, ""${ userId }==temperature"".

A stateful function condition indicates duration or repeatability of one or more atomic conditions, and is a condition expression generated by a function. An expression format is $$function name <parameter>, for example, "$$counter <20>".

A condition combination is a combination including logical relations between a plurality of atomic conditions and logical relations between the atomic conditions and the stateful function condition.

A condition set is a set of condition combinations.

A map group (map group) is configured to store keys of the one or more atomic conditions and a combination of the keys.

A map (map) is configured to store values corresponding to the keys of the one or more atomic conditions.

In the foregoing description, the numbers of steps, such as S110, S 120, and the like, do not necessarily indicate that the steps are performed according to the sequence. The sequence of the steps may be interchanged when allowed, or the steps may be performed simultaneously.

Unless otherwise defined, all technical and scientific terms used in this specification have same meanings as those usually understood by a person skilled in the art of this application. The terms used in this specification are merely intended to describe embodiments of this application, and are not intended to limit this application.

The following describes the technical solutions related to embodiments of this application with reference to the accompanying drawings in embodiments of this application.

A first solution provides an event bus solution. A framework of the event bus solution is implemented based on the foregoing event-driven model of the serverless function. The event-driven model includes an event source, an event bus, and an event handler. An event grid (eventgrid) serves as the event bus, and the event handler is an event destination. For example, a filtering rule in the event grid is defined as follows:

```
"advancedFilters": [{
    "operatorType": "Number Greater Than Or Equals",
"key": "data. counter",
"value": 30
11
```

Based on the JSON syntax in the preceding example, an operatorType field includes NumberIn, Number-LessThan, NumberGreaterThan, NumberInRange and StringContains, to indicate filtering types, where key indicates an event field to be filtered, and Value indicates a specific filtering condition.

The event grid (eventgrid) includes current existing types of event filtering rules. Compared with the event bus in the Background, the event grid has more types of filtering rules. Currently, the event filtering rules supported by the event grid are classified into four types: numeric matching, character string matching, definition matching, and AND/OR matching. The four types of matching rules include different data types. Numeric matching includes NumberIn, NumberNotIn, and NumberInRange, which are used for filtering an event by determining a numeric value and range of a field of the event. Character string matching includes StringNotContains, StringBeginsWith and StringNotIn, which are used for filtering an event by determining whether Contains and prefix of a string in the field are the same as those in character string matching. Definition matching includes IsNullOrUnderfined, IsNotNull, and the like, which are used for determining whether the fields are defined in the event. OR/AND is a combination of the three matching conditions. An "AND" or "OR" combination of the conditions may be used for filtering of events in a complex scenario.

The event grid (eventgrid) also suffers from the disadvantage mentioned in the Background. The event filtering rules are also inadequate for the complex scenario. The rules cannot be extended, and do not support customization by the user. Only the existing four filtering rules are supported, which is limited.

A second solution provides a meaningless event model (knative event), which is a system designed to meet common requirements of cloud native development and provides composable source code to enable later binding of an event source and an event consumer. For eventing components in knative, the event generator and event consumer are independent of each other, like in other event-driven environments. Currently, Knative supports only two types of event rules: Type (event type) and Source (event source). In Knative, an event that meets a rule is obtained by filtering events by polling all filters. When there is a large-scale of event rules, polling searching becomes a performance bottleneck. An example of an event filtering rule in Knative is as follows:
filter:

source And Type:
type:dev.knative.foo
source: dev.knative.foo
broker: defalut

Source code of the filtering rule in Knative is as follows:

```
fun (x FilterResult) and (y FilterResult) FilterResult{
    if x==NoFilter{return y}
    if y==NoFilter{return x}
    if x==PassFilter && y== PassFilter {return PassFilter }
return FailFilter }
```

The filtering rule in Knative has the same disadvantage for the complex IoT scenario and cannot meet a filtering requirement. In a current knative event filter procedure, a polling mechanism is used to match an event against a rule. This cannot meet a task requirement in the complex scenario with a large-scale of rules.

For example, in the Internet of things scenario, for filtering of an air conditioner turn-on event, a message is sent to an event destination to turn on an air conditioner only when both of the following two conditions are met: a temperature is higher than 30°C twice, and it is detected that an event that there is someone at home lasts for 1 second. In the filtering rule of this event, the message for turning on the air conditioner is sent to the event destination only when a temperature count is two and duration of a person at home is 1 second.

In the event bus solution, such events cannot be effectively filtered. In addition, it can be learned from the examples of the rules in the conventional technology that, in the conventional technology, event rule configuration types are fixed, with low extensibility. Custom rules by a user are not supported. For events in this type of complex scenario, there is no condition rule configuration of duration, for example, a timing rule and a count rule. Consequently, events in this type of complex Internet of things scenario cannot be filtered.

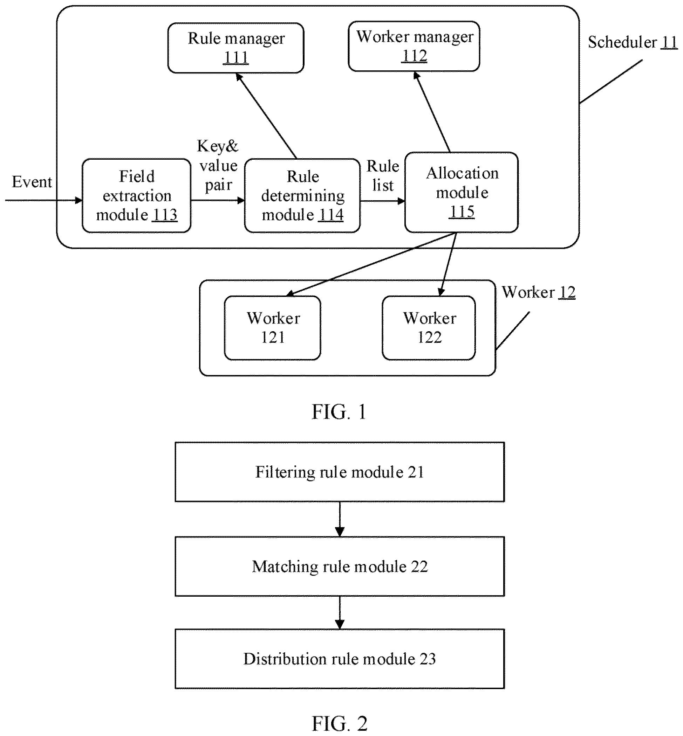

FIG. 1 is a diagram of an architecture of an application system of an event processing method according to an embodiment of this application. As shown in FIG. 1, the system includes a scheduler 11 and a worker 12.

The scheduler 11 preliminarily filters events and allocates a to-be-filtered event.

In an implementable implementation, the scheduler 11 may manage registered rules and original rules in the server by groups, determine, based on a grouping management rule, a rule or a rule list related to an event input by an event source, and filter the event based on the related rule or rule list.

In an implementable implementation, the scheduler 11 manages the registered rules and the original rules in the server using a rule manager 111.

To adapt to a large-scale of event rules, the rule manager 111 manages the event rules by groups using a map group-map (map group-map) structure, and stores a corresponding event rule based on a (key) and a corresponding value (value). The key indicates a field to be filtered or to be matched against, and the corresponding value indicates a specific filtering condition.

When an event is processed, the scheduler 11 first extracts a field to be filtered or to be matched against and a corresponding value from the event using a field extraction module 113, and determines a key and a corresponding value. A rule determining module 114 determines, from the rule manager, based on a key-corresponding value pair, an event rule that meets the field to be filtered or to be matched against and the corresponding value. An allocation module 115 determines a worker using a worker manager, and sends the to-be-filtered event and the corresponding event rule to the worker 12.

The worker 12 decomposes the event rule allocated and sent by the scheduler 11, to match the to-be-filtered event against the event rule at a finer granularity. For example, a numeric condition, a counting condition, and a duration condition in the event rule are matched with the field to be filtered or to be matched against of the to-be-filtered event. An event that meets the event rule is sent to an event destination.

In an implementable implementation, the scheduler 11 manages the worker 12 using the worker manager 112.

The scheduler 11 distributes, when a worker has been allocated for the event that meets the rule and the corresponding rule, the event that meets the rule and the corresponding rule to the allocated worker, for example, the worker 121, and distributes, when no worker is allocated for the event that meets the rule and the corresponding rule, the event that meets the rule and the corresponding rule to a worker with minimum load, for example, a worker 122.

The architecture of the system of the event processing method provided in this embodiment of this application caters to an event-driven model of serverless function computing. The event source and the event destination are independent of each other, and a stateful function condition is provided for event filtering and matching processing, and a user-defined rule is added.

Before the event processing method provided in this embodiment of this application, a rule expressing an intent of a user for filtering, matching, and distributing an event needs to be registered with a server. An embodiment of this application provides an expression instance of creating a rule by a user through encoding, for example, expression (1):

```
"inputfilter":"${userId}==zhangshan‖${userId}==lisi",
"expression": {
"conditionset" :{
        "cs1": {
"conditions": {
        "c1": ${dataType}==\"temperature\",
        "c2": ${payload.temp}>30,
        "c3": $$counter<2>
},
"relation": "c1&&c2&&c3"
},
        "cs2": {
"conditions": {
        "c4": ${dataType}==\" peopleCounter \",
        "c5": ${payload.count}>0,
        "c6": $$duration<1second>
},
"relation": "c4&&c5&&c6"
},
"relation": "cs1&&cs2"
}
}
"targets":
{
"endpoint":{
"uri" :"http://9.121.244.225 : 8080"
},
"event_msg":{
        "action": "please turn on the air conditioner"
}
}
]                                    (1)
```

The event rule expression shown in expression (1) includes:
A plurality of atomic conditions (conditions), where condition names serve as keys (keys) of the atomic conditions, the keys indicate fields to be filtered or to be matched against, and values corresponding to the keys indicate specific filtering conditions.

For example, an atomic condition is "${userId}==zhangshan", where a key is "userId", and a value corresponding to the userId is "zhangshan". The atomic condition indicates that a field to be filtered or to be matched against is the userId and a specific filtering condition to be met is a value zhangshan of the field userId.

A plurality of stateful function conditions, where function names serve as keys, and values corresponding to the keys are parameter values.

The stateful function condition includes a counting condition, a duration condition, and the like. For example, a stateful function condition is "$$counter <20>", where a key is counter, and a value of the counter is 20. The condition indicates continuous counting for 20 times.

A condition combination (conditions), where the condition combination is a combination including logical relations between the plurality of atomic conditions and the stateful function condition. A key (key) of the conditions is a name of the condition combination, and values (values) of the conditions are the plurality of atomic conditions and a plurality of stateful function conditions.

An example is as follows: "cs1": {

```
"conditions": {
     "c1": ${ dataType }==\"temperature\",
     "c2": ${payload.temp}>30,
     "c3": $$counter<2>
     },
     "relation": "c1&&c2&&c3"
} (2)
```

In expression (2), the condition combination "conditions" includes an atomic condition c1, an atomic condition c2, and a second condition c3. The relatestion indicates a logical relation between the atomic condition c1, the atomic condition c2, and the stateful function condition c3 in the condition combination. "&&" can indicate "AND" logic, "∥" can indicate "OR" logic, and "()" can be used to change priority of a logical operation.

"cs1" is the name of the condition combination "conditions". "relation": "c1&&c2&&c3" indicates that the logical relation between c1, c2, and c3 is "AND". The condition combination "conditions" indicates a rule that the events that meet c1 and c2 occur twice.

In expression (1), conditionset is a set of condition combinations, is used in a complex event aggregation scenario, and may be denoted as a condition set. A name of the condition set is used as a key, and corresponding values are logical relations between the condition combinations and logical relations between conditions in the condition combinations. For a further example, relatestion may be logical relations between a plurality of conditions, or may be logical relations between a plurality of condition combinations.

FIG. 2 is a diagram of a structure of a rule expression according to an embodiment of this application. The following separately describes in detail a filtering rule (inputfilter) module 21, a matching rule (expression) module 22, and a distribution (targets) module 23 based on encoding in expression (1) and FIG. 2.

The filtering rule module 21 is configured to determine a preliminary filtering rule based on a rule expression. The preliminary filtering rule includes one or more atomic conditions, and the preliminary filtering rule uses one or more atomic conditions to determine an event concerned by the rule, to filter out an event that is not concerned. Atomic conditions "${userId}==zhangshan" and "${userId}==lisi" are used as examples. In addition, a logical relation between the two atomic conditions is OR "∥". An event that meets either of the two atomic conditions is a to-be-filtered event, and can proceed to the next step for matching by the matching rule module 22.

It may be understood that, the preliminary filtering rule expressed in the filtering rule module 21 is that in events, only an event with the "userId" "zhangshan" or "lisi" is allowed to proceed to be matched against the rule by the matching rule module 22 and distributed by the distribution (targets) module 23, and other events are not matched or distributed. In this way, a scale of event matching is reduced.

In an implementable implementation, the filtering rule module 21 expresses a preliminary filtering rule for initially filtering an event published by an event source to a server. In initial filtering, it may be determined whether content of the event in the server includes a field corresponding to the key in the filtering rule and whether the field meets a condition of the preliminary filtering rule. If the content of the event includes a corresponding field consistent with the key in the preliminary filtering rule, and a value of the field meets the condition of the preliminary filtering rule, the event is a to-be-filtered event, and may pass preliminary filtering to proceed to the next step for matching by the matching rule module 22 at finer granularity.

The matching rule module 22 is configured to determine an event matching rule based on the rule expression. The event matching rule includes one or more atomic conditions and one or more stateful function conditions. The event matching rule is used for event matching based on a condition combination of the one or more atomic conditions and the one or more stateful function conditions. For differentiation, the atomic condition in the event matching rule may be denoted as a first condition, the stateful function condition may be denoted as a second condition, and the atomic condition in the preliminary filtering rule may be denoted as a third condition.

The matching rule module 22 may perform matching on the to-be-filtered event at finer granularity.

For example, content included in "expression" in expression (1) is code of the event matching rule, and a set of two condition combinations "conditions" is used in expression (1). The first "conditions" is used as an example. The "conditions" includes two first conditions "c1" and "c2' and one second condition "c3". As defined in "c1", the event content needs to include a field that meets a data type, "dateType", and a value of the field is "temperature". As defined in "c2", the event content needs to include a field that meets a condition that a temperature indication value, "playload.temp", is greater than 30. As defined in "c3", the event content needs to include a field that meets the second condition, "counter<2>". Events that meet c1 and c2 need to occur twice. The second "conditions" is used as an example. As defined in "c4", the event content needs to include a field that meets a data type, "dateType", and a value of the field is "peopleCounter". As defined in "c5", the event content needs to include a field that meets a condition that a parameter, "payload.count", is greater than 0. As defined in "c6", a field that meets the second condition, duration<1second> is needed. A value of duration for which events that meet c4 and c5 last is 1 second.

It may be understood that the event matching rule defined in the "expression" module of expression (1) is as follows: For a to-be-filtered event that meets "inputfilter", the event needs to meet both the condition combination "cs1" and the condition combination "cs2". A message "please turn on the air conditioner" in the "targets" module can be sent to a destination address "http://9.121.244.225:8080" in the "targets" only when the event meets aggregation of the two conditions combinations "cs1" and "cs2".

"counter<*>" and "duration<*>" in the "expression" module are second conditions. Compared with the conventional technology, this application holds progresses. For example, event matching is performed based on an event matching rule including at least one second condition.

The distribution module 23 is configured to determine a distribution rule, for example, sending a message or an instruction and setting a specified address. The distribution module 23 is configured to send the message or the instruction to an event destination when the to-be-filtered event meets the matching rule, where the event destination is the specified address. For example, as defined in the "targets" in expression (1), "X-State-Key" is sent to http header information, "endporint" is a specified address to which the event is sent, and "event_msg" is a message that is sent when the to-be-filtered event meets the matching rule.

It may be understood that a distribution rule expressed by the expression "targets" in the expression (1) is as follows: After the to-be-filtered event is successfully matched with the condition in the "expression", the message "please turn on the air conditioner" is sent to the "http://9.121.244.225:8080".

In an implementable implementation, intent of the user for filtering, matching, aggregating, and distributing events is defined and described in an encoding form. After the rule expression shown in expression (1) is obtained, the event rule expression may be registered with the server by invoking an Api.

Based on the event rule expression registered with the server, an embodiment of this application provides an event rule processing method. The method includes: obtaining an event filtering rule, where the event filtering rule is used for performing filtering to obtain an event that meets all of one or more third conditions and an event matching rule, the event matching rule is used for performing filtering to obtain an event that meets one or more first conditions and one or more second conditions, and the second condition indicates duration or repeatability of the one or more first conditions; and storing the one or more third conditions and the event matching rule.

To improve a processing manner of the conventional technology in which event rules are directly polled and traversed, and adapt to management of a large scale of event rules, in the event rule processing method provided in this embodiment of this application, a map group and a map are used to store the event filtering rule registered with the server. The event filtering rule includes one or more third conditions and the event matching rule.

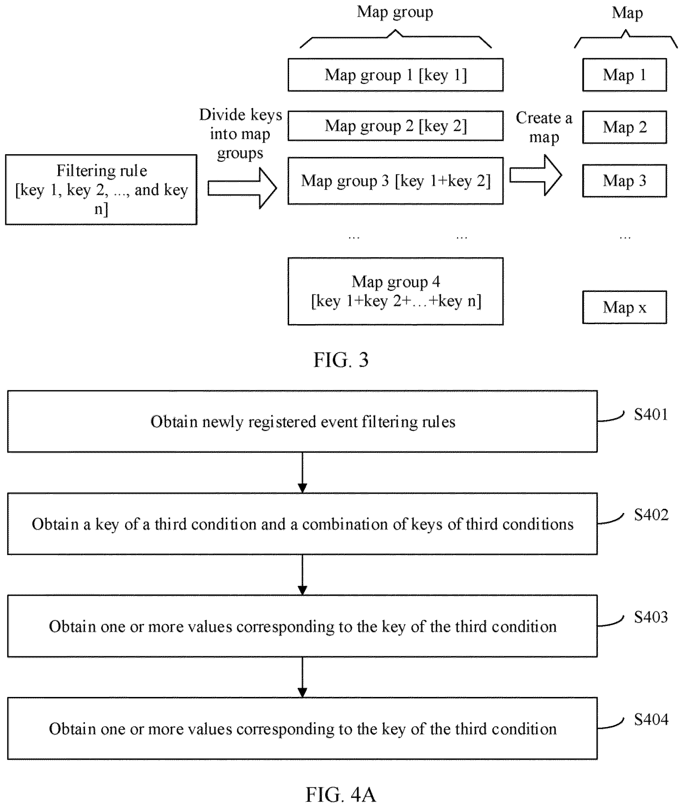

FIG. 3 is a diagram of a structure of map group-map initialization configuration according to an embodiment of this application. As shown in FIG. 3, a server stores one or more third conditions and an event matching rule based on a key and a corresponding value of each third condition that are registered with the server.

In an implementable implementation, the one or more third conditions, that is, preliminary filtering rules, are stored through the following steps S31 to S34

S31: Obtain a key of each of the one or more third conditions.

In an implementable implementation, in the event filtering rule, names of the one or more third conditions may be obtained to determine one or more keys.

For example, after the event filtering rule in the rule expression (1) is registered with the server, the scheduler 11 extracts a name of each third condition in "inputfilter" in the rule expression (1), and determines a key. For example, the name of the third condition is "userId", and it is determined that the key is "userId".

For example, there may be a plurality of keys, and the plurality of keys include a key 1, a key 2, ..., and a key n, where n indicates a quantity of keys.

S32: Determine one or more map groups based on each key and a combination of keys. The map group in this step may be denoted as a first map group.

In an implementable implementation, the key of each third condition or the combination of the keys of the third conditions may serve as an identifier of the first map group, to create one or more map groups.

For example, all the n keys may be combined to determine map groups, and each key separately serves as an identifier of each map group, to create the map groups.

S33: Obtain key values of the one or more third conditions, and determine one or more maps based on a key value of each third condition. The map in this step may be denoted as a first map.

In an implementable implementation, one or more values corresponding to the key of each third condition may be obtained, and serve as identifiers of one or more maps in the map group, to create one or more maps.

In an implementable implementation, one or more maps may be created in each map group, and the map is used to store a corresponding rule expression. A representation of each map group is a key obtained from each third condition, and a representation of each map is one of one or more values corresponding to the key.

For example, one key may correspond to a plurality of key _values. For the "inputfilter" module in the rule expression (1), "userId" may be denoted as "key 1", "zhangshan" may be denoted as "key 1_value 1", and "lisi" may be denoted as key 1_value 2.

S34: Store the key combination and a key value combination, where the key combination is the combination of the keys of the one or more third conditions, and the key value combination is a combination of the key values of the one or more third conditions.

In an implementable implementation, the event filtering rule is stored in the map.

For ease of understanding, this type of storage manner for a map group and a map may be considered as group storage. The map group is a group sequence identifier of a group, and the map is an identifier of each group member in the group. In this way, an applicable event filtering rule can be directly obtained by matching the content of the event against the key and the key value of the third condition.

When the server does not include event filtering rules that are stored based on the map group-map structure, after the event filtering rules including the one or more third conditions and the event matching rules are registered with the server by invoking the Api, the server may create one or more map group-maps based on the keys and the key values of the one or more third conditions, and store the event filtering rules in corresponding maps, to manage the event filtering rules by groups.

In an implementable implementation, the one or more third conditions and the event matching rule may be stored in a corresponding map based on an identifier of a map group and an identifier of the map.

For example, after the rule expression (1) is registered with the server by invoking the Api, the server stores the rule expression (1) in both a map with the identifier "zhangshan" and a map with the identifier "lisi" in the map group corresponding to the identifier userId.

When the server includes a plurality of registered event filtering rules that are managed by groups based on the map group-map structure, after the event filtering rules are registered with the server by invoking the Api, the server may add the event filtering rule to a corresponding map combination-map structure based on the key of each third condition in the event filtering rule, the combination of the keys of the third conditions, and one or more values corresponding to each key.

FIG. 4A is a flowchart of adding an event rule according to an embodiment of this application. As shown in FIG. 4A, when a server finds that event filtering rules are registered, the server manages the event filtering rules by groups. A procedure in which event rules are added to an existing map combination-map includes the following steps S401 to S404.

S401: Obtain newly registered event filtering rules, where the event filtering rule includes one or more third conditions and an event matching rule. The newly registered event filtering rules are denoted as first rules. Registered event filtering rules stored in the server by groups based on a map group-map structure are denoted as second rules.

In an implementable implementation, the server obtains m newly registered first rules, and there are k second rules in the server.

S402: Obtain a key of each third condition in the first rules and a combination of keys of the third conditions.

In an implementable implementation, the server obtains a key of each third condition in the m first rules, and obtains a key combination based on a logical relation between the third conditions, for example, n keys included in the m first rules, including a key 1, a key 2, ..., key n, and obtain an identifier corresponding to a map group of the k second rules.

S403: Obtain one or more values corresponding to the key of each third condition in the first rules.

In an implementable implementation, the server obtains one or more values corresponding to each of the n keys in the m first rules, and obtains a key value combination based on a logical relation between the third conditions.

For example, the server obtains one or more values corresponding to each of n keys in m first event rules, and obtains a key value combination based on a logical relation between third conditions.

S404: Add the first rules to a map combination-map structure based on the key of each third condition in the first rules, the combination of keys of the third conditions, and the one or more values corresponding to the key of each third condition.

In an implementable implementation, the identifier of the map group may be determined based on the key of each third condition and based on whether the relation between the keys of the third conditions is "&&" or "‖". Based on one or more values corresponding to the key of each third condition, an identifier of a map is searched for. A first rule is added to a map group-map that matches a key&value pair of the first rule.

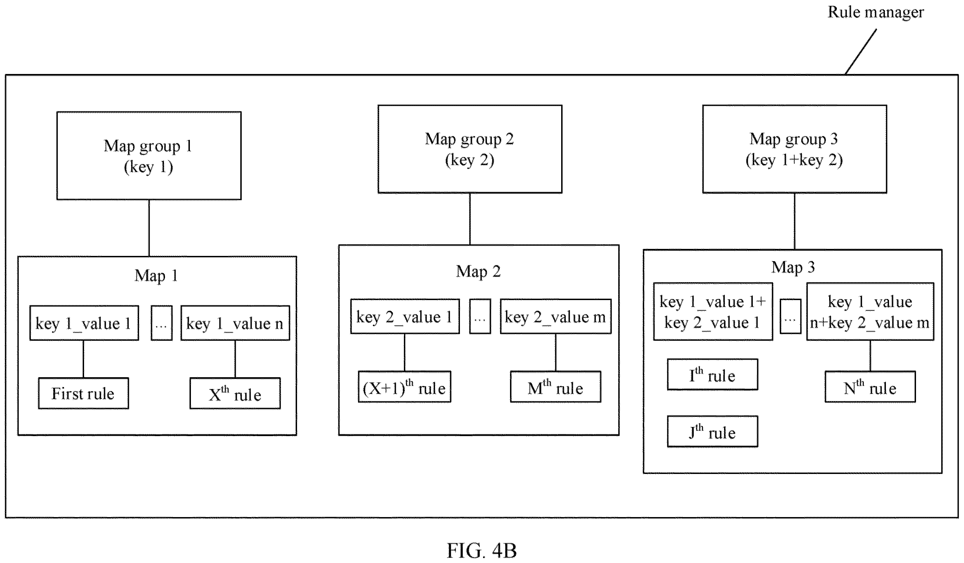

For example, an event filtering rule, rule 1, registered with the server includes third conditions "${userId}==zhangshan" and "${userId}==lisi", and a logical relation between the third conditions is OR "‖". A key (key) that is of the event filtering rule and that is obtained by the server is userId, and values corresponding to the userId are key_value 1, zhangshan, and key _value 2, lisi. A map group with the identifier userId is found in the registered map group-map. A map with the identifier "zhangshan" is found in the map group with the identifier userId, and the event filtering rule 1 is added to the map with the identifier zhangshan in the map group with the identifier userId. A map with the userId "lisi" is found in the map group with the identifier userId, and the event filtering rule, rule 1, is added to map2 with the identifier lisi in the map group. In this way, the diagram of the map group-map structures shown in FIG. 4B is obtained.

If no map group with the identifier userId is found in the registered map group-map, a map group with the identifier userId is created. If no map with the identifier "zhangshan" or "lisi" is found in the map group with the identifier userId, a map with the identifier "zhangshan" or "lisi" is created for the map group with the identifier userId. The event filtering rule is stored in the newly created map with the identifier "zhangshan" or "lisi".

According to the event rule processing method provided in this embodiment of this application, a new event filtering rule is added to an existing map combination-map in a plugin manner, to implement customization and extensibility of the event filtering rule. This caters to preliminary event filtering in various complex scenarios.

After the foregoing steps are performed, all event filtering rules are managed based on the map group-map. When a large scale of event rules arrives, polling does not need to be performed to search for a rule that meets an event. The event filtering rule only needs to be directly extracted from the rule manager based on the event content and the identifier of the map group and the identifier of the map, and then the event filtering rule and the corresponding event are allocated together to the worker 12 for processing.

The worker 12 decomposes the event filtering rule distributed by the scheduler 11, to perform matching on the event at finer granularity, for example, matching the event against a value, a counting condition, or a duration condition. The following describes this process in detail.

For example, the following matching rule expression is used:

```
"expression": {
  "conditionset" :{
      "cs1": {
          "conditions": {
      "c1": ${ dataType }==\"temperature\",
      "c2": ${payload.temp}>30,
      "c3": $$counter<2>
  },
  "relation": "c1&&c2&&c3"
  },
  "cs2": {
          "conditions": {
      "c4": ${dataType}==\" peopleCounter \",
      "c5": ${payload.count}>0,
      "c6": $$duration<1second>
  },
  "relation": "c4&&c5&&c6"
  },
  "relation": "cs1&&cs2"
  } (3)
```

In expression (3), count is a stateful function condition, that is, a second condition. The event matching rule includes four first conditions and two second conditions. The second conditions record a count and duration of an event that meets a requirement, to express the complex matching rule.

In the event rule processing method provided in this application, a complex matching rule expression is decomposed based on expression (3), to obtain a plurality of first conditions and a plurality of second conditions. A tree of the rule expression is generated based on logical relations between the conditions. The tree of the rule expression integrates common filtering conditions, such as the first conditions and the second conditions.

In an implementable implementation, the event matching rule is stored in a form of a tree. The tree includes one or more parent nodes and a plurality of child nodes. A first condition and a second condition that match each other are used as different child nodes of a same parent node, and the parent node of the first condition and the second condition that match each other uses an AND operation manner.

In an implementable implementation, the tree is used to filter a to-be-filtered event.

In an implementable implementation, steps of decomposing an event matching rule into a tree may include the following steps S51 and S52.

S51: Decompose the event matching rule including one or more first conditions and one or more second conditions, to obtain a logical relation between the first conditions and logical relations between the first conditions and the second condition.

For example, a condition combination in "expression" of expression (3) of the registered rule may be decomposed, to obtain a plurality of atomic conditions, including c1, c2, c4, and c5, and a plurality of second conditions, including c3 and c6. The logical relations between the conditions are as follows: c1&&c2&&c3, c4&&c5&&c6, and cs1&& cs2.

S52: Construct a tree based on the one or more first conditions, the one or more second conditions, and the logical relations.

In an implementable implementation, a first condition and a second condition that match each other are used as different child nodes of a same parent node, and the parent node of the first condition and the second condition that match each other uses an AND operation manner. The tree of the event matching rule is constructed based on one or more parent nodes and a plurality of child nodes.

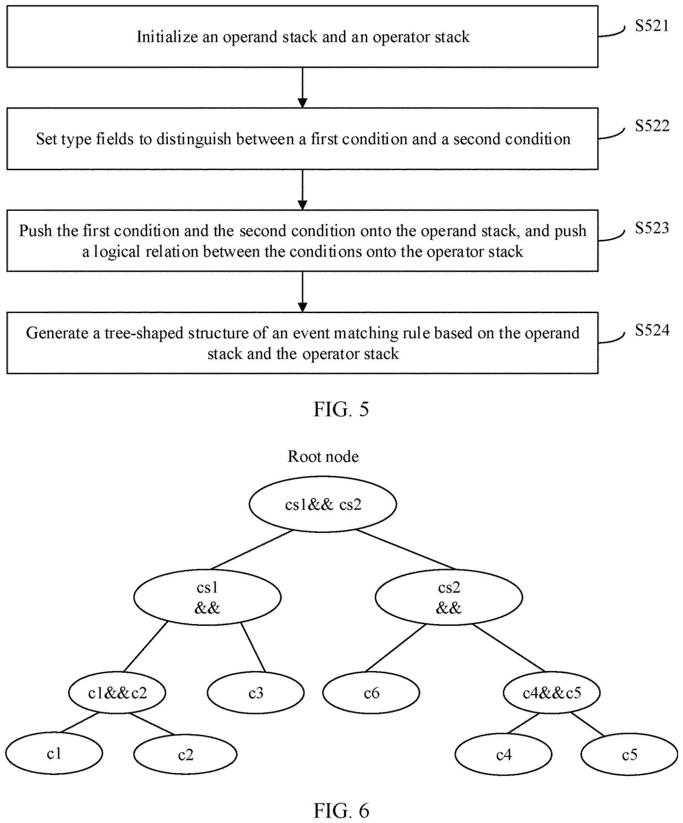

FIG. 5 is a flowchart of constructing a tree-shaped structure of an event matching rule according to an embodiment of this application. As shown in FIG. 5, S52 includes the following steps S521 to S524.

S521: Initialize an operand stack and an operator stack. The operand stack is used to store a plurality of operands, and the operator stack is used to store a plurality of operators.

S522: Set type (type) fields to distinguish between the first condition and the second condition.

In an implementable implementation, different type values may be set, to distinguish between the first condition and the second condition.

For example, if the type is "cel", it indicates the first condition, and if the type is "function", it indicates the second condition. When the tree of the event matching rule is constructed, the first condition is used as a matching entry node. For example, if the type of c1, c2, c4, and c5 is "cel", c1, c2, c4, and c5 may be used as matching entry nodes.

S523: Use each first condition and each second condition as operands, and sequentially push the operands onto the operand stack, and use the logical relations between the conditions as operators, and sequentially push the operators onto the operator stack.

For example, the conditions c1, c2, c3, c4, c5, and c6 obtained after decomposition in expression (3) are sequentially pushed onto the operand stack as operands, and the logical relations between the conditions, including "&&", "‖", and "()", are sequentially pushed onto the operator stack.

S524: Generate a tree-shaped structure of the event matching rule based on the operand stack and the operator stack. The tree-shaped structure of the event matching rule may be denoted as a rule expression tree.

In an implementable implementation, the tree uses the first condition as the matching entry node and the second condition as a leaf node, and connects the matching entry node and the leaf node based on the logical relation.

In an implementable implementation, S524 is implemented through the following steps S5241 to S5243, to generate the tree based on the plurality of operands and the plurality of operators.

S5241: Use the first conditions of plurality of operands in the operand stack as matching entry nodes of the tree.

FIG. 6 is a diagram of a rule expression tree according to an embodiment of this application. For example, as shown in FIG. 6, if a condition expression is executed, the atomic conditions are used as matching entry nodes of the rule expression tree. For example, c1, c2, c4, and c5 are the matching entry nodes.

S5242: Use the second conditions in the operand stack as leaf nodes. For example, as shown in FIG. 6, the second conditions c3 and c6 are used as the leaf nodes.

S5243: Traverse all operands in the operand stack and all operators in the operator stack, connect, based on an ADD operation manner, matching entry nodes and a leaf node, to generate a parent node until the root node is generated, to obtain a tree form, and record the first conditions as entry conditions of the event matching rule.

In an implementable implementation, the server traverses the operator stack, and performs a recursive operation if the server encounters "(", starting from traversing the operator stack.

If the server encounters the operator ")" or the end of the expression, the server checks the top-of-stack operator of the operator stack. The following cases are included.

    a. If the top-of-stack operator is empty or "‖", the operator is stored in the operator stack.

    b. If the top-of-stack operator is "&&", a binary tree is constructed:

    b1: A root node is "cs1&& cs2", and an operand is popped off the stack twice.

    b2: Obtain two operands cs1 and cs2 as the left and right subtrees of the root node.

    b3: Push the root node onto the operand stack.

After the operator stack is traversed, the operand stack is traversed (in this case, only the operator "‖" exists in the operator stack).

The operator is popped off the stack once to obtain the rule expression tree. The event matching rule is stored in the form of the tree, and the first condition in the leaf node is denoted as the matching entry condition.

In an implementable implementation, when the rule expression registered with the server includes only the "expression" module shown in expression (3), the server may further store the event matching rule based on the key of each first condition registered with the server and the corresponding value. The event matching rule includes one or more first conditions and one or more second conditions.

In an implementable implementation, the one or more first conditions and the one or more second conditions are stored by performing the following steps S61 to S64.

S61: Obtain the key of each of the one or more first conditions.

In an implementable implementation, names of the one or more first conditions may be obtained to determine one or more keys.

For example, after the event matching rule in the "expression" module included in the rule expression (1) is registered with the server, the scheduler 11 extracts the name of each first condition in the "expression" to determine the key. For example, the name of the first condition is "dataType", and it is determined that the key is "dataType".

For example, there may be a plurality of keys, and the plurality of keys include a key 1, a key 2, ..., and a key n, where n indicates a quantity of keys.

S62: Determine an identifier a map group based on the key of each first condition and a combination of the keys of the first conditions. The map group in this step may be denoted as a second map group.

In an implementable implementation, the key of each first condition or the combination of the keys of the first conditions may serve as the identifier of the second map group, to create one or more second map groups.

S63: Determine an identifier of a map based on one or more values corresponding to the key of each first condition. The map in this step may be denoted as a second map.

In an implementable implementation, the one or more values corresponding to the key of each first condition may be obtained, and serve as identifiers of one or more second maps in the second map group, to create the one or more second maps.

For example, one key may correspond to a plurality of key _values. For the "expression" in the rule expression (1), "dataType" may be denoted as "key 1", "temperature" may be denoted as "key 1_value 1", and "peopleCounter" may be denoted as "key 1_value 2".

S64: Obtain one or more map group-maps based on the identifier of the second map group and the identifier of the second map, and add the event matching rule to the second map in the map combination-map structure.

When the server does not include rules that are managed by groups based on the map group-map structure, after the event matching rules are registered with the server by invoking the Api, the server may create the one or more map group-maps based on the identifier of the second map group and the identifier of the second map in the event matching rules. The map group-map is configured to manage the event filtering rules by groups.

In an implementable implementation, the identifier of the second map group may be determined based on the key of each first condition and the combination of the keys of the first conditions. The identifier of the second map is determined based on the one or more values corresponding to the key of each first condition. The event matching rule is determined based on the identifier of the second map group and the identifier of the second map.

In an implementable implementation, the event matching rule may be stored in a corresponding second map based on the identifier of the second map group and the identifier of the second map.

For example, after expression (3) is registered with the server by invoking the Api, the server stores expression (3) in both a map with the identifier temperature and a map with the identifier peopleCounter in the map group corresponding to the identifier dataType.

When the server includes a plurality of registered rules that are managed by groups based on the map group-map structure, after the event matching rules are registered with the server by invoking the Api, the server may add the event matching rules to the second maps based on the key of each first condition in the event matching rules, the combination of the keys of the first conditions, and the one or more values corresponding to the key of each first condition.

In an implementable implementation, the determining an event matching rule based on one or more first conditions includes: adding the event matching rule to the second map group-second map. In the second map group-second map, the identifier of the second map group includes the key of each first condition or a combination of the keys of the first conditions. The identifier of the second map includes the one or more values corresponding to the key of each first condition.

For a specific procedure in which the event matching rules are added to the existing map combination-map structure based on the key of each first condition in the event matching rules or the combination of the keys of the first conditions, refer to steps S401 to S404 and FIG. 4B. Details are not described herein again.

It may be understood that, when an event filtering rule includes the one or more third conditions and the event matching rule, map group-maps may be managed by groups based on the filtering rule including the one or more third conditions, without grouping the event matching rules based on the map group-maps.

According to the event rule processing method provided in this embodiment of this application, a new rule is added to an existing map combination-map structure in a plugin manner, to implement customization and extensibility of the event filtering rule. This caters to events in various complex scenarios.

In an implementable implementation, the event filtering rule further includes a message, an instruction, and/or a specified address. Processing on the event rule includes storing the message and/or the specified address.

After receiving an event input by an event source, an event bus of the server may filter the event against the filtering rule, to determine whether the event is a to-be-filtered event, and match, against the event matching rule at finer granularity, an event that meets the filtering rule.

Based on the processing on the event rule, an embodiment of this application provides an event processing method, applied to filtering of events in a server. The method includes: matching a to-be-filtered event against an event matching rule, where the event matching rule is used for performing filtering to obtain an event that meets one or more first conditions and one or more second conditions, and the second condition indicates duration or repeatability of the one or more first conditions; and sending an instruction to a destination address when the to-be-filtered event meets the event matching rule.

In an implementable implementation, the events in the server are matched against one or more third conditions, to obtain the to-be-filtered event, where the to-be-filtered event is an event that meets the one or more third conditions.

In this implementation, the events in the server are essentially matched against the third condition to preliminarily filter the events, to obtain the to-be-filtered event.

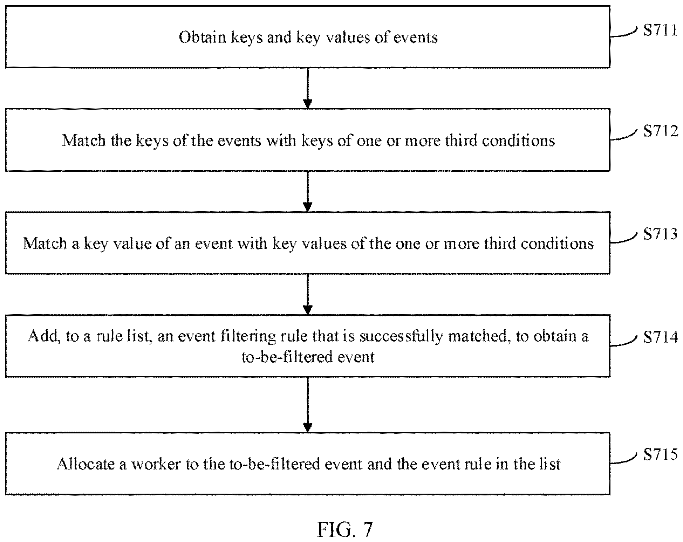

FIG. 7 is a flowchart in which events are preliminarily filtered in an event processing method according to an embodiment of this application. As shown in FIG. 7, events in a server are matched against a third condition to preliminarily filter the events, to obtain a to-be-filtered event. This may be implemented by performing the following steps.

S711: Obtain keys and key values of the events.

In an implementable implementation, fields and values of the fields corresponding to the keys of the third conditions may be obtained from the events.

Refer to FIG. 1. After the events enter the scheduler 11, specified fields (denoted as event_key below) and corresponding values (denoted as event_key _value below) are first obtained from the events based on each key of one or more third conditions in a filtering rule. There may be a plurality of specified fields. The specified field may be, for example, a specified identifier field, a specified name field, a specified location field, or a specified data type field.

For example, a key of the registered filtering rule is userId. A specified field is obtained from an event A, where the specified field indicates information related to userId.

For example, keys of a registered filtering rule are userId and age. A specified field indicating information related to userId and a specified field indicating information related to age are obtained from an event B.

S712: Match the keys of the events against keys of the one or more third conditions.

In an implementable implementation, an event may be matched against a map group based on all keys and a combination of the keys of the event. If the matching succeeds, S713 is performed. If the matching fails, the event does not meet the filtering rule, and the event is not processed.

For example, when the event _key obtained from the event A is userId, in the map groups shown in FIG. 4B, a map group that concerns the event is a map group 1 based on userId. S713 is performed.

For example, when event_keys obtained from the event B are userId and age, in the map groups shown in 4B, a map group for a rule that may concern the event is the map group 1 based on userId, a map group for a rule that may concern the event is a map group 2 based on age, and a map group for a rule that concerns the event is a map group 3 based on a combination of userId+age. S713 is performed.

S713: When a key of an event meets the keys of the one or more third conditions, match a key value of the event against key values of the one or more third conditions, where a to-be-filtered event is an event that meets the key values of the one or more third conditions.

In an implementable implementation, when the key of the event is successfully matched with an identifier of a map group, the key value of the event is matched against an identifier of a map. When the key value is successfully matched with the identifier of the map, it is determined that the event is the to-be-filtered event.

In an implementable implementation, an event is matched against corresponding maps based on all event_key_values and a combination of the event _key _values. If the matching succeeds, S714 is performed. If the matching fails, the event is not processed.

For example, in the event A, when the event_key 1 _values corresponding to userId include "zhangshan" and "lisi", the map group 1 is searched for a map with the identifier "zhangshan". If the map with the identifier "zhangshan" is found, the rule 1 is obtained. The map group 1 is searched for a map with the identifier "lisi". If the map with the identifier "lisi" is found, the rule 2 is obtained. The rule 1 and the rule 2 are rules that may concern the event. When at least one of the rules is found, the matching succeeds, and S714 is performed.

For example, in the event B, when event_key 1 _values corresponding to userId include "zhangshan" and "lisi", the map group 1 is searched for a map with the identifier "zhangshan". If the map with the identifier "zhangshan" is found, the rule 1 is obtained. The map group 1 is searched for a map with the identifier "lisi". If the map with the identifier "lisi" is found, the rule 2 is obtained. When an event_key 2 _value corresponding to age includes "30", the map group 2 is searched for a map with an identifier "30". If the map with the identifier "30" is found, a rule 3 is obtained. The map group 3 is searched for a map with an identifier "zhangshan" + "30". If the map with the identifier "zhangshan" + "30" is found, a rule 4 is obtained. The map group 3 is searched for a map with an identifier "lisi" + "30". If the map with the identifier "lisi" + "30" is found, a rule 5 is obtained. The rule 1, the rule 2, the rule 3, the rule 4, and the rule 5 are rules that may concern the event. When at least one of the rules is found, a determining result is that a map exists, and S714 is performed.

S714: Add, to a rule list, event filtering rules stored in a plurality of maps that are successfully matched with the key values of the event.

In an implementable implementation, when there are the plurality of maps that are matched with the event _key _values, a plurality of event filtering rules in the plurality of maps that are matched with the event _key _values are added to the rule list.

For example, in the example of S713, it is determined that the event A is the to-be-filtered event, and the matched rules are the rule 1 and/or the rule 2. Rule expressions corresponding to the rule 1 and/or the rule 2 are added to the rule list.

For example, in the example of S713, the event B is the to-be-filtered event, and the matched rules are the rule 1, rule 2, rule 3, rule 4, and/or rule 5. Rule expressions corresponding to the rule 1, rule 2, rule 3, rule 4, and/or rule 5 are added to the rule list.

Based on the foregoing embodiment, the event preliminary filtering may determine which events are concerned, to filter out events that are not interested, to reduce a subsequent event processing scale, and improve responsiveness of the server to an event. This can bring good experience to a user.

S715: Allocate the worker 12 to the to-be-filtered event and the corresponding event filtering rule in the list.

In an implementable implementation, the to-be-filtered event and the rule in the corresponding rule list may be distributed to the worker 12.

In this implementation, if a worker has been allocated for the rule in the rule list, the to-be-filtered event and the corresponding rule are sent to the allocated worker. Alternatively, if no worker has been allocated for the rule in the rule list, a worker with minimum load may be selected from available worker managers (worker mndt) for the rule, and the to-be-filtered event and the rule are sent to the worker with the minimum load.

For example, if a worker, for example, a worker 1 or a worker 2, has been allocated for the rule in the rule list, the event and the corresponding rule are distributed to the worker 1 or the worker 2. Alternatively, if no worker has been allocated, an event processor with minimum load is selected from the available worker managers for the rule, and the to-be-filtered event and the corresponding event filtering rule are sent to the allocated event processor.

In an implementable implementation, the event filtering rule further includes one or more first conditions. The events may be matched against the one or more first conditions, to obtain an event that meets the one or more first conditions.

In this implementation, the event filtering rule further includes one or more second map groups and one or more second maps. An identifier of the second map group includes the key of each of the one or more first conditions or a combination of keys of the first conditions. An identifier of the second map includes a value corresponding to the key of each first condition, and the second map includes one or more first conditions, one or more first conditions, and one or more second conditions.

In this implementation, the events in the server are matched against the one or more first conditions. For specific implementation steps, refer to steps S401 to S404. Details are not described herein again.

For example, when a preliminary filtering rule is used to preliminarily filter the event, it is only necessary to determine whether content of the event includes a field to be filtered and whether a value of the field meets a condition requirement. If the value of the field meets the requirement, the event proceeds to the next step for matching against the matching rule. For the event rule expressed in expression (1), only the event with the userId zhangshan or lisi is received, and other events are excluded and will not be filtered by "expression" in the next step. This reduces an event processing scale.

The foregoing implementation implements a process in which the event published by the event source to the server is preliminarily filtered, the worker 12 in the server subsequently decomposes the event filtering rule distributed by the scheduler 11, to match the event against the matching rule at finer granularity, for example, matching the event against a value, a counting condition, or a duration condition. The following describes this process in detail.

To be specific, decomposing the event filtering rule means expressing the event matching rule in the event filtering rule in a form of a tree.

In an implementable implementation, the event matching rule is expressed in a form of a tree. The tree includes one or more parent nodes and a plurality of child nodes. A first condition and a second condition that correspond to each other are used as different child nodes of a same parent node, and a parent node of a first condition and a second condition that match each other corresponds to an AND operation rule.

In an implementable implementation, the matching a to-be-filtered event against an event matching rule means traversing the tree for the to-be-filtered event. The following steps are specifically included.

S81: Decompose the event matching rule to obtain logical relations between the first conditions and logical relations between the first conditions and the second conditions, and construct a rule expression tree based on the first conditions, the second conditions, and operation relations.

S82: Traverse the rule expression tree for the to-be-filtered event.

For specific implementation steps of step S81, refer to steps S51 and S52 in the event rule processing method provided in the foregoing embodiment of this application. Details are not described herein again.

In an implementable implementation, when step S82 is performed, traversal may be implemented by progressively matching the to-be-filtered event against each node of the rule expression tree. When a matching state of each node of the rule expression tree indicates a matching success, it may be determined that the event is an event that meets a matching rule module.

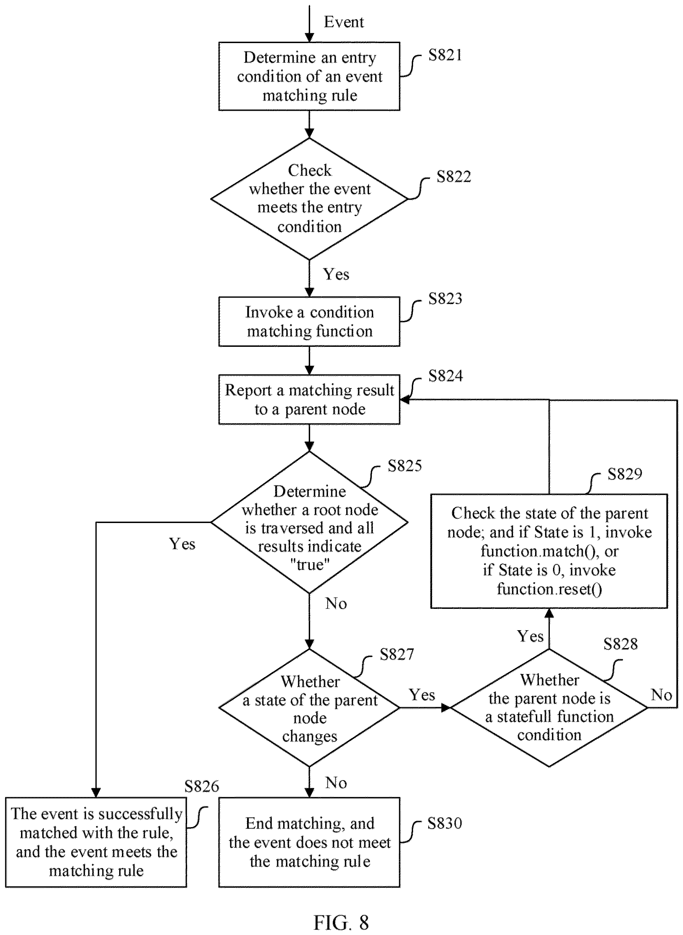

FIG. 8 is a flowchart of traversing a rule expression tree for a to-be-filtered event according to an embodiment of this application. As shown in FIG. 8, step S82 is performed through the following steps S821 to S830, to traverse the rule expression tree for content of the event.

S821: For the to-be-filtered event entering the worker 12, determine an entry condition of the event matching rule.

For example, based on the type fields set in step S522, the type of the first conditions c1, c2, c4, and c5 is "cel". It is determined that c1, c2, c4, and c5 are entry conditions of the matching rule.

S822: Check whether the to-be-filtered event meets the entry condition. If the to-be-filtered event does not meet the entry condition, the event is not an event of concern, and is not processed. Alternatively, if the to-be-filtered event meets the entry condition, the event is a to-be-filtered event, and S823 is performed.

S823: Invoke a condition matching function, event.match(rule 1), to obtain an output matching result.

S824: Report the matching result to the parent node.

S825. Determine whether a root node is traversed and a matching state of each node is "true". If a determining result is "yes", S826 is performed. Alternatively, if a determining result is "no", S827 is performed.

S826: The event is successfully matched with the rule, and it is determined that the event is an event that meets the event matching rule, and a matching state of each node of the rule expression tree is set to zero.

S827: Determine whether a state of the parent node changes. If a determining result is "yes", S828 is performed. Alternatively, if a determining result is "no", S830 is performed.

S828. Continue to update a result to a previous level, and check whether the parent node is the second condition. If the parent node is the second condition, S829 is performed.

S829: Trigger a function condition to be executed, and check a state value of the parent node state. If the state value is 1, the funtion.match() function is invoked and a first matching result is obtained based on output of the funtion.match() function. If the state value is 0, a funtion.reset() function is invoked, and a second matching result is obtained based on output of the funtion.reset() function. S824 is performed to report the first or second matching result.

S830: End the condition matching, and report a matching result to the parent node.

According to the event processing method provided in this embodiment of this application, a general and efficient event filtering and matching procedure is used. The event filtering rules are managed by groups, and the event matching rule is decomposed into a binary tree, to cater to a requirement for responsiveness to a message in a plurality of scenarios, for example, a single-event scenario, an event aggregation scenario, and a scenario with high throughput and a large quantity of rules.

The event processing method provided in this embodiment of this application is implemented using a plug-in function condition, to facilitate extension and help a user define a new event matching rule and an aggregation scenario. This method can be used for event filtering in a complex scenario.

According to the event processing method provided in this embodiment of this application, the simple and clear expression is used, enabling the user to quickly grasp the method and reducing the learning curve. In addition, the aggregation function is used, to cater to an event aggregation requirement. This contributes to enhancing product competitiveness.

**Embodiment 1**

Embodiment 1 provides an air conditioner turn-on scenario. An event is sent to an event destination, that is, an air conditioner will be turned on, only when all the following conditions are met: the event includes temperature information, indicating that the temperature exceeds 30 degrees and that there are two consecutive events of exceeding 30 degrees; in addition, the event includes information about a quantity of people, indicating that the quantity of people is greater than 1 and that an event of having more than 1 person lasts for 1 second.

For the event rules in the foregoing scenario, Embodiment 1 of this application provides an event rule registration method. According to the method, a user compiles code of the filtering rule module 21, the matching rule module 22, and the distribution module 23 of a rule expression. After the rule expression is compiled, the rule expression is registered with a server through an Api. Then, an event source sends an event to the server, and the server may filter specific information in the event based on an event rule determined by the rule expression.

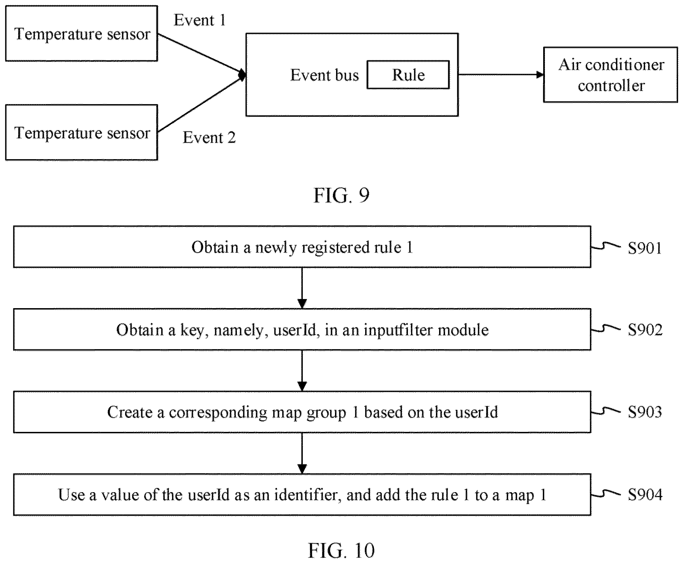

FIG. 9 is a diagram of event rule processing in the air-conditioner turn-on scenario according to Embodiment 1 of this application. As shown in FIG. 9, in the air conditioner turn-on scenario, temperature information in events 1 and 2 is derived from temperature sensors 1 and 2. A plurality of rules in an event bus filter specific information in the events. When the events meet conditions, a control instruction for turning on the air conditioner is sent to the event destination, that is, an air conditioner controller.

The following rule expression is compiled for the scenario shown in FIG. 9. In the rule expression, rule 1 is encoded as follows:

```
"inputfilter":"${userId}==temperature‖${userId}==peopleCounter",
"expression": {
"conditionset" :{
"cs1": {
"conditions": {
"c1": ${ dataType }==\"temperature\",
"c2": ${payload.temp}>30,
"c3": $$counter<2>
},
"relation": "c1&&c2&&c3"
},
"cs1": {
"conditions": {
"c4": ${userId}==\" peopleCounter \",
"c5": ${payload.count}>0,
"c6": $$duration<1second>
},
"relation": "c4&&c5&&c6"
},
"relation": "cs1&&cs2"
}
}
"targets":
{
"endpoint":{
"uri":"http://9.121.244.225:8080"
},
"event_msg":{
"action":"please turn on the air conditioner"
}
}
]
                                                         (4)
```

In expression (4), the expression of "inputfilter" is "${userId}==temperature‖${userId}==peopleCounter". Rules are grouped based on keys of the "inputfilter", and a map group-map structure is created. The map group 1 is obtained based on a current key value, userId, and a map is obtained based on a value. Currently, the value of the userId includes temperature or peopleCounter, and map_key values in maps are temperature and peopleCounter. Map structures store event rules that meet temperature and peopleCounter.

FIG. 10 is a flowchart of preliminary filtering of an event rule for the scenario in FIG. 9 according to an embodiment of this application. As shown in FIG. 10, the procedure includes the following steps:

S901: A server obtains an expression of a newly registered rule, where the expression is denoted as rule 1, and rule 1 includes an inputfilter module, an expression module, and a targets module.
S902: The server obtains keys (keys) of all third conditions in the inputfilter module, where key=userId.
S903: Create a corresponding map group 1 based on the key, userId.
S904: Use a value corresponding to the userId as an identifier of a map 1, and add the rule 1 to the map 1, to obtain a map group-map structure.

For example, the userId includes two values: "temperature" and "peopleCounter", and the rule 1 is added to both a map with the identifier "temperature" and a map with the identifier "peopleCounter".

After the foregoing steps are performed, all rules are stored in the map group-map. When a large scale of event rules arrives, polling does not need to be performed to search for a rule that meets an event. An event that meets a corresponding rule only needs to be directly obtained based on a key value, and then the event filtering rule and an event that meets the preliminary filtering rule are sent together to the worker 12 for matching processing.

In Embodiment 1 of this application, a large quantity of rules are managed by groups using the map group-map structure, to effectively distribute rules to cater to a scenario with a large scale of rules.

Embodiment 2

Embodiment 2 provides a matching rule expression sent to the worker 12:
"expression":

$$\$data.devId == xx \;\&\&\; ((\$data.tempature >= 30 \;\&\&\; \$\$count{<}10{>}\;) \;||$$

$$(\$data.people > 1) \;\&\&\; \$\$count{<}20{>})) \qquad\qquad (5)$$

In expression (5), count is a second condition. The second condition records a count of an event that meets a requirement, to implement filtering of the complex rules.

In the worker 12, expression (5) is decomposed into the following five conditions:

| | | |
|---|---|---|
| C1: | type: "cel" | context: $data.tempature >= 30 |
| C2: | type: "function" | "name": "counter" "arg":"10" |
| C3: | type: "cel" | context: $data.people >= 1 |
| C4: | type: "function" | "name": "counter" "arg":"20" |
| C5: | type: "cel" | context: $data.devId == xx |

C1, C3, and C5 are atomic conditions, and C2 and C4 are second conditions.

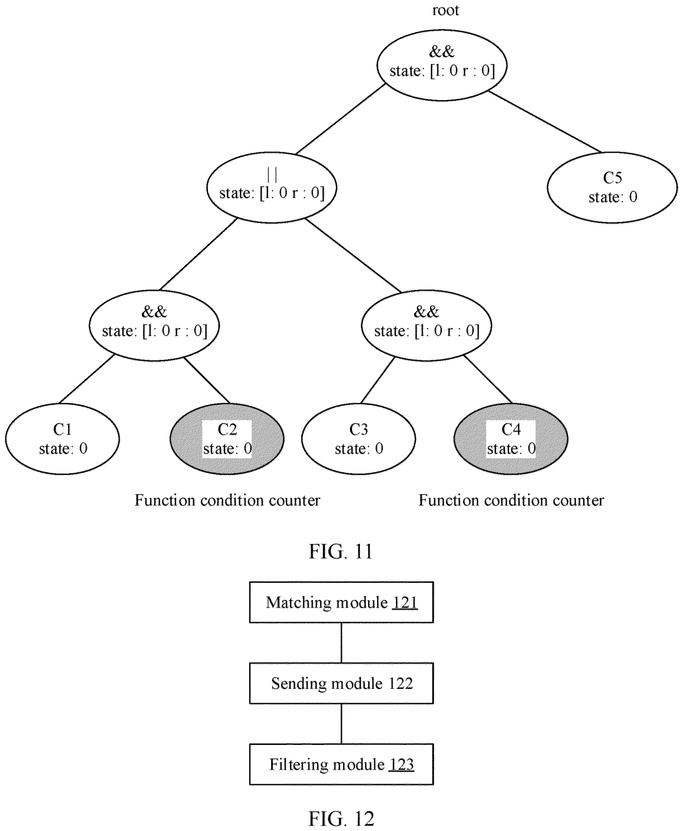

FIG. 11 is a diagram of matching states of nodes after a rule expression tree is traversed for an event according to Embodiment 2 of this application. Refer to the states shown in FIG. 11, steps of matching an event against nodes of a rule expression tree includes:

S1001: Construct the rule expression tree based on the atomic conditions C1, C3, and C5, and the second conditions C2 and C4.

For example, it is determined that the atomic conditions C1, C3, and C5 are matching entry nodes of the rule expression tree, where the second condition C2 and the atomic condition C1 are respectively left and right leaf nodes under a same parent node C1&&C2. A state of the node C2 is recorded. The second condition C4 and the atomic condition C3 are respectively left and right leaf nodes under a same parent node C3&&C4. A state of the node C4 is recorded. The rule expression tree is constructed. For specific steps, refer to steps S521 to S524.

S1002: Perform matching on an event, and obtain a result of matching the event against each node based on the rule expression tree.

In a feasible implementation, a to-be-filtered event may be solved based on the constructed rule expression tree. A procedure includes S10021 and S10022.

S10021: Start the matching from an entry node of a rule state tree. FIG. 11 is used as an example. C1, C3, and C5 are matching entry nodes of the rule state tree, to indicate entry conditions of a matching rule. The event enters the worker 12, and is matched against the entry conditions C1, C3, and C5.

S10022: Obtain a matching result of each matching entry node.

If a state of the condition C1 is equal to 1, an associated funtion.match() function is invoked, to trigger a counter for counting and record an execution result of the second condition C2. Alternatively, if a state of the condition C1 is equal to 0, an associated funtion.reset() function is invoked, to clear an execution result of the second condition C2.

If a state value of the condition C3 is 1, an associated funtion.match() function is invoked, to trigger the counter for counting and record an execution result of condition C4.

If a state value of the condition C3 is 0, an associated funtion.reset() function is invoked, to clear an execution result of the condition C4.

S1003: A parent node obtains state values of the left and right leaf nodes, and updates a state of the parent node.

For example, the following steps may be included:

S10031: Use the condition C1 and the function condition C2 as left and right leaf nodes of a first parent node respectively, where the first parent node is "C1&&C2", and a state of the first parent node is an "AND" (&&) result obtained based on the state values of C1 and C2. In state [l: 0 r: 0], l: 0 indicates that a state value of a matching result of the left leaf node C1 is 0, and r: 0 indicates that a state value of a matching result of the right leaf node C2 is 0. The first parent node updates the state of the first parent node by performing an "AND" operation based on the state values of the left and right leaf nodes.

S10032: Use the condition C3 and the function condition C4 as left and right leaf nodes of a second parent node respectively, where the second parent node is "C3&&C4", and a state of the second parent node is an "AND" (&&) result obtained based on the state values of C3 and C4. The parent node "C3&&C4" obtains the state values of the condition C3 and the function condition C4, and updates the state of the parent node by performs an AND operation.

If a state value of the parent node "C1&&C2" is equal to 1, traversing is performed upward, and S10033 is performed. Alternatively, if a state value of the parent node "C1&&C2" is not equal to 1, 10034 is performed.

If a state value of the parent node "C3&&C4" is equal to 1, traversing is performed upward, and S10033 is performed. Alternatively, if a state value of the parent node "C3&&C4" is not equal to 1, 10034 is performed.

S10033: If a root node is traversed, the entire rule expression tree is traversed, and if the state of each node is 1, the event is successfully matched with the rule.

S10034: If a state of the parent node "C1&&C2" or "C3&&C4" changes, traversing is performed upward.

S1004: Check whether a state of a node of a second condition is 0, and if the state is 0, invoke a funtion.reset() function to clear the state.

In Embodiment 2 of this application, the matching rule is decomposed by creating the rule expression tree, so that a common filter condition and a stateful function condition can be solved uniformly. An event is matched and filtered based on the stateful function condition, to perfectly cater to a scenario with complex filtering rules in an IOT scenario.

FIG. 12 shows an event processing apparatus according to an embodiment of this application. As shown in FIG. 12, the event processing apparatus includes: a matching module 121, configured to match a to-be-filtered event against an event matching rule, where the event matching rule is used for performing filtering to obtain an event that meets one or more first conditions and one or more second conditions, and the second condition indicates duration or repeatability of the one or more first conditions; and a sending module 122, configured to send an instruction to a destination address when the to-be-filtered event meets the event matching rule.

In this embodiment, the apparatus further includes a filtering module 123, configured to match events in a server against one or more third conditions, to obtain the to-be-filtered event, where the to-be-filtered event is an event that meets the one or more third conditions.

In this embodiment, the third condition includes a key and a key value.

In this embodiment, the event matching rule is expressed in a form of a tree. The tree includes one or more parent nodes and a plurality of child nodes. A first condition and a second condition that match each other are used as different child nodes of a same parent node, and the parent node of the first condition and the second condition that match each other uses an AND operation manner.

In this embodiment, the matching a to-be-filtered event against an event matching rule means traversing the tree for the to-be-filtered event.

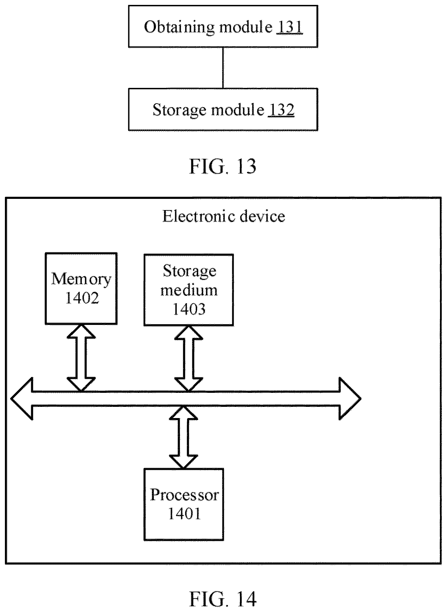

FIG. 13 shows an event rule registration apparatus according to an embodiment of this application. As shown in FIG. 13, the apparatus includes: an obtaining module 131, configured to obtain an event filtering rule, where the event filtering rule is used for performing filtering to obtain an event that meets all of one or more third conditions and an event matching rule, the event matching rule is used for performing filtering to obtain an event that meets one or more first conditions and one or more second conditions, and the second condition indicates duration or repeatability of the one or more first conditions; and a storage module 132, configured to separately store the one or more third conditions and the event matching rule.

In this embodiment, the third condition includes a key and a key value.

In this embodiment, the event matching rule is stored in a form of a tree. The tree includes one or more parent nodes and a plurality of child nodes. A first condition and a second condition that match each other are used as different child nodes of a same parent node, and the parent node of the first condition and the second condition that match each other uses an AND operation manner.

In this embodiment, the three is used for performing filtering to obtain a to-be-filtered event, and the to-be-filtered event is an event that meets the one or more third conditions.

In this embodiment, the one or more third conditions are used for performing matching on events in a server to obtain the to-be-filtered event, and the to-be-filtered event is the event that meets the one or more third conditions.

FIG. 14 shows an electronic device according to an embodiment of this application. The electronic device includes at least one memory 1402, configured to store a program, and at least one processor 1401, configured to execute the program stored in the memory 1402. When the program stored in the memory 1402 is executed, the processor 1401 is configured to perform any event processing method according to the first aspect and any event rule processing method according to the second aspect.

An embodiment of this application provides a storage medium 1403. The storage medium stores computer-executable instructions, and when the computer-executable instructions are invoked by a computer, the computer is enabled to perform any event processing method according to the first aspect and any event rule processing method according to the first aspect.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

In addition, aspects or features in embodiments of this application may be implemented as a method, an apparatus or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk drive, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry an instruction and/or data.

It should be understood that, sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person skilled in the art may clearly learn that, for the purpose of convenient and brief description, for a specific working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the function is implemented in the form of the software functional unit and sold or used as an independent product, the function may be stored in a computer-readable storage medium. Based on such an understanding, the technical solutions of embodiments of this application essentially, or the part contributing to the prior art, or some of the technical solutions may be implemented in a form of a software product. The computer software product is stored in a storage medium, and includes several instructions for instructing a computer device (which may be a personal computer, a server, or an access network device) to perform all or some of the steps of the methods described ii embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application.

**Claims**

1. An event processing method, applied to filtering of events in a server, wherein the method comprises:

matching a to-be-filtered event against an event matching rule, wherein the event matching rule is used for performing filtering to obtain an event that meets one or more first conditions and one or more second conditions, and the second condition indicates duration or repeatability of the one or more first conditions; and

sending an instruction to a destination address when the to-be-filtered event meets the event matching rule.

2. The event processing method according to claim 1, further comprising:
matching the events in the server against one or more third conditions, to obtain the to-be-filtered event, wherein the to-be-filtered event is an event that meets the one or more third conditions.

3. The event processing method according to claim 2, wherein the third condition comprises a key and a key value.

4. The event processing method according to claim 3, wherein the matching the events in the server against one or more third conditions comprises:

   obtaining keys and key values of the events;
   matching the keys of the events against keys of the one or more third conditions; and
   when a key of an event meets the keys of the one or more third conditions, matching a key value of the event against key values of the one or more third conditions, wherein the to-be-filtered event is an event that meets the key values of the one or more third conditions.

5. The event processing method according to any one of claims 1 to 4, wherein the event matching rule is expressed in a form of a tree, the tree comprises one or more parent nodes and a plurality of child nodes, a first condition and a second condition that correspond to each other are used as different child nodes of a same parent node, and a parent node of a first condition and a second condition that match each other corresponds to an AND operation rule.

6. The event processing method according to claim 5, wherein the matching a to-be-filtered event against an event matching rule means traversing the tree for the to-be-filtered event.

7. The event processing method according to any one of claims 2 to 6, further comprising:
obtaining an event filtering rule, wherein the event filtering rule is used for performing filtering to obtain an event that meets all of the one or more third conditions and the event matching rule; and storing the one or more third conditions and the event matching rule.

8. The event processing method according to claim 7, wherein the storing the one or more third conditions comprises:

   obtaining the keys of the one or more third conditions, and obtaining the key values of the one or more third conditions; and
   storing a key combination and a key value combination, wherein the key combination is a combination of the keys of the one or more third conditions, and the key value combination is a combination of the key values of the one or more third conditions.

9. The event processing method according to claim 7, wherein when the to-be-filtered event is obtained by matching the events in the server against the one or more third conditions, the event matching rule is stored.

10. An event rule processing method, wherein the method comprises:

    obtaining an event filtering rule, wherein the event filtering rule is used for performing filtering to obtain an event that meets all of one or more third conditions and an event matching rule, the event matching rule is used for performing filtering to obtain an event that meets one or more first conditions and one or more second conditions, and the second condition indicates duration or repeatability of the one or more first conditions; and
    storing the one or more third conditions and the event matching rule.

11. The event rule processing method according to claim 10, wherein the third condition comprises a key and a key value.

12. The event rule processing method according to claim 10 or 11, wherein the storing the one or more third conditions comprises:

    obtaining keys of the one or more third conditions, and obtaining key values of the one or more third conditions; and
    storing a key combination and a key value combination, wherein the key combination is a combination of the keys of the one or more third conditions, and the key value combination is a combination of the key values of the one or more third conditions.

13. The event rule processing method according to claim 10 or 11, wherein the event matching rule is stored in a form of a tree, the tree comprises one or more parent nodes and a plurality of child nodes, a first condition and a second condition that match each other are used as different child nodes of a same parent node, and the parent node of the first condition and the second condition that match each other uses an AND operation manner.

14. The event rule processing method according to claim 13, wherein the three is used for performing filtering to obtain a to-be-filtered event, and the to-be-filtered event is an event that meets the one or more third conditions.

15. The event rule processing method according to any one of claims 10 to 14, wherein the one or more third conditions are used for performing matching on events in a server to obtain the to-be-filtered event, and the to-be-filtered event is the event that meets the one or more third conditions.

16. An event processing apparatus, wherein the apparatus comprises:

a matching module, wherein the matching module is configured to match a to-be-filtered event against an event matching rule, the event matching rule is used for performing filtering to obtain an event that meets one or more first conditions and one or more second conditions, and the second condition indicates duration or repeatability of the one or more first conditions; and
a sending module, wherein the sending module is configured to send an instruction to a destination address when the to-be-filtered event meets the event matching rule.

17. The event processing apparatus according to claim 16, further comprising:
a filtering module, wherein the filtering module is configured to match events in a server against one or more third conditions, to obtain the to-be-filtered event, and the to-be-filtered event is an event that meets the one or more third conditions.

18. The event processing apparatus according to claim 17, wherein the third condition comprises a key and a key value.

19. The event processing apparatus according to claim 16, wherein the event matching rule is expressed in a form of a tree, the tree comprises one or more parent nodes and a plurality of child nodes, a first condition and a second condition that match each other are used as different child nodes of a same parent node, and the parent node of the first condition and the second condition that match each other uses an AND operation manner.

20. The event processing apparatus according to claim 17, wherein the matching a to-be-filtered event against an event matching rule means traversing the tree for the to-be-filtered event.

21. An event rule processing apparatus, wherein the apparatus comprises:

an obtaining module, wherein the obtaining module is configured to obtain an event filtering rule, the event filtering rule is used for performing filtering to obtain an event that meets all of one or more third conditions and an event matching rule, the event matching rule is used for performing filtering to obtain an event that meets one or more first conditions and one or more second conditions, and the second condition indicates duration or repeatability of the one or more first conditions; and
a storage module, wherein the storage module is configured to separately store the one or more third conditions and the event matching rule.

22. The event rule processing apparatus according to claim 22, wherein the third condition comprises a key and a key value.

23. The event rule processing apparatus according to claim 21 or 22, wherein the event matching rule is stored in a form of a tree, the tree comprises one or more parent nodes and a plurality of child nodes, a first condition and a second condition that match each other are used as different child nodes of a same parent node, and the parent node of the first condition and the second condition that match each other uses an AND operation manner.

24. The event rule processing apparatus according to claim 23, wherein the three is used for performing filtering to obtain a to-be-filtered event, and the to-be-filtered event is an event that meets the one or more third conditions.

**25.** The event rule processing method according to any one of claims 20 to 24, wherein the one or more third conditions are used for performing matching on events in the server to obtain the to-be-filtered event, and the to-be-filtered event is the event that meets the one or more third conditions.

**26.** An electronic device, comprising:

at least one memory, configured to store a program; and
at least one processor, configured to execute the program stored in the memory, wherein when the program stored in the memory is executed, the processor is configured to perform the event processing method according to any one of claims 1 to 9 and the event rule processing method according to any one of claims 10 to 15.

**27.** A storage medium, wherein the storage medium stores computer executable instructions, and when the computer executable instructions are invoked by a computer, the computer is enabled to perform the event processing method according to any one of claims 1 to 9 and the event rule processing method according to any one of claims 10 to 15.

Rule manager
111

Worker manager
112

Scheduler 11

Event

Field
extraction
module 113

Key&
value
pair

Rule
determining
module 114

Rule
list

Allocation
module
115

Worker 12

Worker
121

Worker
122

FIG. 1

Filtering rule module 21

Matching rule module 22

Distribution rule module 23

FIG. 2

Map group                                                 Map

Map group 1 [key 1]                                    Map 1

Divide keys            Map group 2 [key 2]            Create a        Map 2
into map                                                 map
groups

Filtering rule                  Map group 3 [key 1+key 2]                        Map 3
[key 1, key 2, ..., and key
n]

...                    ...                                 ...

Map group 4
[key 1+key 2+...+key n]                                Map x

## FIG. 3

| Obtain newly registered event filtering rules | S401 |

| Obtain a key of a third condition and a combination of keys of third conditions | S402 |

| Obtain one or more values corresponding to the key of the third condition | S403 |

| Obtain one or more values corresponding to the key of the third condition | S404 |

## FIG. 4A

FIG. 4B

EP 4 443 296 A1

Initialize an operand stack and an operator stack — S521

Set type fields to distinguish between a first condition and a second condition — S522

Push the first condition and the second condition onto the operand stack, and push a logical relation between the conditions onto the operator stack — S523

Generate a tree-shaped structure of an event matching rule based on the operand stack and the operator stack — S524

FIG. 5

Root node

cs1&& cs2

cs1
&&

cs2
&&

c1&&c2

c3

c6

c4&&c5

c1

c2

c4

c5

FIG. 6

| | |
|---|---|
| Obtain keys and key values of events | S711 |

| | |
|---|---|
| Match the keys of the events with keys of one or more third conditions | S712 |

| | |
|---|---|
| Match a key value of an event with key values of the one or more third conditions | S713 |

| | |
|---|---|
| Add, to a rule list, an event filtering rule that is successfully matched, to obtain a to-be-filtered event | S714 |

| | |
|---|---|
| Allocate a worker to the to-be-filtered event and the event rule in the list | S715 |

FIG. 7

Event

Determine an entry
condition of an event
matching rule — S821

Check
whether the event
meets the entry
condition — S822

Yes

Invoke a condition
matching function — S823

Report a matching result
to a parent node — S824

Determine
whether a root node
is traversed and all
results indicate
"true" — S825

Yes

No

Check the state of the parent
node; and if State is 1, invoke
function.match(), or
if State is 0, invoke
function.reset() — S829

Yes

Whether
a state of the parent
node
changes — S827

Yes

Whether
the parent node is
a statefull function
condition — S828

No

No

The event is successfully
matched with the rule,
and the event meets the
matching rule — S826

End matching, and
the event does not meet
the matching rule — S830

FIG. 8

Temperature sensor —Event 1→ Event bus | Rule → Air conditioner controller

Temperature sensor —Event 2→

FIG. 9

| Obtain a newly registered rule 1 | ∿ S901 |

↓

| Obtain a key, namely, userId, in an inputfilter module | ∿ S902 |

↓

| Create a corresponding map group 1 based on the userId | ∿ S903 |

↓

| Use a value of the userId as an identifier, and add the rule 1 to a map 1 | ∿ S904 |

FIG. 10

root

&&
state: [l: 0 r : 0]

||
state: [l: 0 r : 0]

C5
state: 0

&&
state: [l: 0 r : 0]

&&
state: [l: 0 r : 0]

C1
state: 0

C2
state: 0

C3
state: 0

C4
state: 0

Function condition counter

Function condition counter

FIG. 11

Matching module 121

Sending module 122

Filtering module 123

FIG. 12

Obtaining module 131

Storage module 132

FIG. 13

Electronic device

Memory 1402

Storage medium 1403

Processor 1401

FIG. 14

## INTERNATIONAL SEARCH REPORT

| International application No. |
| --- |
| **PCT/CN2022/140641** |

| A. | CLASSIFICATION OF SUBJECT MATTER |
| --- | --- |

G06F 16/9532(2019.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, CNABS: 事件, 规则, 条件, 确认, 驱动, 匹配, 第一, 第二, 重复, 持续, 执行, 关键字, 关键词, 树, event, rule, condition, affirm, drive, match, first, second, repeat, persist+, perform, key word, tree

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 111245907 A (CHANJET INFORMATION TECHNOLOGY CO., LTD.) 05 June 2020 (2020-06-05)<br>  description, paragraphs 2-57 | 1-27 |
| Y | CN 112262352 A (GEOQUEST SYSTEMS B.V.) 22 January 2021 (2021-01-22)<br>  claims 1-49 | 1-27 |
| Y | CN 111464546 A (NATIONAL UNIVERSITY OF DEFENSE TECHNOLOGY OF PLA) 28 July 2020 (2020-07-28)<br>  description, paragraphs 2-84 | 1-27 |
| Y | CN 112771550 A (OPTUMSOFT, INC.) 07 May 2021 (2021-05-07)<br>  description, paragraphs 31-62 and 215 | 1-27 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 February 2023** | **13 March 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/140641**

| Patent document cited in search report | | | Publication date (day/month/year) | Patent family member(s) | | | Publication date (day/month/year) |
|---|---|---|---|---|---|---|---|
| CN | 111245907 | A | 05 June 2020 | CN | 111245907 | B | 22 April 2022 |
| CN | 112262352 | A | 22 January 2021 | CA | 3100068 | A1 | 21 November 2019 |
| | | | | WO | 2019222033 | A1 | 21 November 2019 |
| | | | | US | 2020174455 | A | 04 June 2020 |
| | | | | US | 2020175443 | A1 | 04 June 2020 |
| | | | | US | 2020175444 | A1 | 04 June 2020 |
| | | | | NO | 202001174 | A | 27 October 2020 |
| | | | | GB | 2587956 | A | 14 April 2021 |
| | | | | US | 11288609 | B | 29 March 2022 |
| CN | 111464546 | A | 28 July 2020 | CN | 111464546 | B | 18 March 2022 |
| CN | 112771550 | A | 07 May 2021 | WO | 2020051373 | A1 | 12 March 2020 |
| | | | | US | 2022100738 | A1 | 31 March 2022 |
| | | | | US | 2020081882 | A1 | 12 March 2020 |
| | | | | US | 11232096 | B2 | 25 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111674682